# EUROPÄISCHE PATENTSCHRIFT

(11) **EP 3 690 565 B1**
(45) Veröffentlichungstag und Bekanntmachung des Hinweises auf die Patenterteilung: **09.10.2024**
(21) Anmeldenummer: 19155311.4
(22) Anmeldetag: 04.02.2019
(51) Int. Cl.: G05B 19/042, H04W 52/02

(54) **GATEWAY MIT NIEDRIGER LEISTUNG**
LOW POWER GATEWAY
PASSERELLE À FAIBLE PERFORMANCE

(43) Veröffentlichungstag der Anmeldung: 05.08.2020
(73) Patentinhaber: VEGA Grieshaber KG, 77709 Wolfach (DE)
(72) Erfinder: WELLE, Roland, 77756 Hausach (DE); BÖRSIG, Jörg, 77776 Schapbach (DE)
(74) Vertreter: Maiwald GmbH

(56) Entgegenhaltungen:
- US-A1- 2014 081 518
- US-A1- 2015 043 411
- US-A1- 2015 139 198
- US-A1- 2018 206 187

## Beschreibung

Die Erfindung betrifft ein Gateway mit niedriger Leistung, das Sensordaten empfängt und weiterleitet sowie ein Verfahren zur Sensordatenweiterleitung.

Gateways dienen dem Empfang und der Weiterleitung von Daten, wobei die Kommunikationsprotokolle für den Empfang und das Senden unterschiedlich sein können. Die Datenquellen können hierbei z.B. ein lokaler Rechner oder Sensoren sein, und die Datensenke ein entfernter Rechner, z.B. ein Server, der über das Internet oder über Mobilfunk mit dem Gateway verbunden ist. Die Schnittstellen können auf beiden Seiten drahtgebunden oder drahtlos sein.

Die Energie zum Betreiben eines Gateways wird üblicherweise aus dem Stromnetz bezogen, so dass trotz eventueller drahtloser Schnittstellen die Flexibilität nicht zufriedenstellend ist. Alternativ kann ein Gateway auch mit einer Batterie betrieben werden, was jedoch durch den üblichen Stromverbrauch eines Gateways häufiges Wechseln oder Wiederaufladen der Batterie bedingt, wodurch die Wirtschaftlichkeit verringert wird.

US 2015 043411 A1 beschreibt ein Gatewaysystem mit einer Senkenknoten-Karte, die gemessene Sensordaten sammelt und überträgt; und eine Gateway-Karte, die die Sensordaten an einen Server überträgt, wobei die Senkenknotenkarte steuern kann, ob die Gateway-Karte mit Strom versorgt wird.

Aufgabe der Erfindung ist es, ein Gateway und ein Verfahren zur Verfügung zu stellen, das sowohl flexibel als auch wirtschaftlich ist.

Die Aufgabe wird durch die Gegenstände der unabhängigen Patentansprüche gelöst. Vorteilhafte Ausführungsformen sind Gegenstand der abhängigen Ansprüche, der folgenden Beschreibung, sowie der Figuren.

Gemäß einem ersten Aspekt wird ein Gateway zur Sensordatenweiterleitung vorgeschlagen, das ein erstes Kommunikationsmodul, einen Prozessor und ein zweites Kommunikationsmodul aufweist. Das erste Kommunikationsmodul ist zum Empfangen von Sensordaten von mindestens einer Sensordatenquelle eingerichtet. Der Prozessor ist mit dem ersten Kommunikationsmodul verbunden und zum Sammeln und Zwischenspeichern der Sensordaten eingerichtet, sowie zum Ausführen von Programmen, die ein Kommunikationsprotokoll abbilden. Das zweite Kommunikationsmodul ist mit dem Prozessor verbunden und zum Senden der gesammelten und zwischengespeicherten Sensordaten eingerichtet. Der Prozessor ist weiterhin eingerichtet, das zweite Kommunikationsmodul zum Senden der gesammelten Daten einzuschalten und nach dem Senden der gesammelten Daten auszuschalten.

Somit wird ein Gateway bereitgestellt, das Daten empfängt und sammelt bzw. zwischenspeichert, und erst nach dem Sammeln weiterleitet. Die Kommunikationsmodule sind eingerichtet, jeweils gemäß einem Kommunikationsprotoll zu senden und zu empfangen; das heißt bezüglich der Hardware die entsprechenden Sende- und Empfangsfrequenzen sowie Modulationsarten zur Verfügung zu stellen, sowie die vom Prozessor empfangenen Nutzdaten, z.B. Sensordaten und Verwaltungsdaten, wie z.B. Header, auf den Träger zu modulieren bzw. in umgekehrter Richtung zu demodulieren und dem Prozessor zur Decodierung und Weiterverarbeitung weiterzureichen. Der Prozessor kann beispielsweise in bekannter Weise mehrere Programme gleichzeitig ausführen, so dass er mindestens zwei Kommunikationsprotokolle gleichzeitig prozessieren kann. Das Gateway kann ferner einen oder mehrere Speicher zum Zwischenspeichern der Daten und zum Speichern der Programme aufweisen. Es können auch zwei oder mehr Prozessoren verwendet werden, allerdings erhöht sich hierdurch der Stromverbrauch. Die Kommunikationsmodule sind eingerichtet, gleiche oder unterschiedliche Kommunikationsprotokolle zu unterstützen. Vorteilhafterweise wird zum Empfang der Sensordaten ein Kurzreichweitenprotokoll unterstützt und zum Senden der gesammelten Daten ein Protokoll, das für große Entfernungen geeignet ist. Die Protokolle können dabei Protokolle gemäß einem Kommunikationsstandard sein, können aber auch proprietäre Protokolle sein.

Der Prozessor sammelt die durch das erste Kommunikationsmodul gemäß einem ersten Kommunikationsprotokoll empfangene Sensordaten, indem er sie in einem Speicher zwischenspeichert. Währenddessen ist das zweite Kommunikationsmodul ausgeschaltet und kann durch z.B. Schalten einer Versorgungsspanung wieder eingeschaltet werden. Unter "ausschalten" wird hierbei auch verstanden, dass Teile des zweiten Kommunikationsmoduls deaktiviert sein können, so dass es sich in einem Energiesparmodus, Ruhe- oder Schlafmodus befindet, und jederzeit z.B. durch einen Befehl wieder aufgeweckt werden kann. Zwischen dem Prozessor und den Kommunikationsmodulen können sich weitere Hardware-Bauteile befinden, um z.B. Ströme und Spannungen zu konditionieren. Sobald der Prozessor genügend Daten gesammelt hat oder nach einem bestimmten Zeitintervall, bereitet er die Sensordaten zum Senden vor. Z.B. kodiert der Prozessor die Sensordaten in ein Format gemäß dem zweiten Kommunikationsprotokoll, schaltet zum Senden der gesammelten Sensordaten das zweite Kommunikationsmodul ein, und gibt die Daten an das zweite Kommunikationsmodul weiter, das letztendlich die Daten physikalisch z.B. an eine Basisstation eines Mobilfunksystems sendet.

Gemäß einem Ausführungsbeispiel weist das Gateway eine Steuereinheit auf, und der Prozessor ist mit der Steuereinheit verbunden oder der Prozessor ist Teil der Steuereinheit. Die Ein- und Ausschaltsignalisierung des Prozessors kann z.B. erst an die Steuereinheit gelangen, die dann das physikalische Signal bereitstellt, um das oder die Kommunikationsmodule ein- oder auszuschalten. Unter "Einschalten" bzw. "Ausschalten" eines Kommunikationsmoduls durch den Prozessor wird daher auch verstanden, dass dazu eine solche möglicherweise vorhandene Steuereinheit verwendet wird.

Gemäß einer Ausführungsform ist das erste Kommunikationsmodul dauerhaft eingeschaltet, so dass es fortlaufend Sensordaten empfangen kann. Das Senden der Sensordaten kann unabhängig vom Empfangen der Sensordaten erfolgen, so dass Sensordaten gleichzeitig oder in einer Empfangspause gesendet werden. Wenn Sensordaten gleichzeitig gesendet und empfangen werden, können während des Sendens gesammelter Daten bereits neue Sensordaten gesammelt werden.

Gemäß einer weiteren Ausführungsform ist der Prozessor eingerichtet, das erste Kommunikationsmodul vor dem Empfang der Sensordaten der mindestens einen Sensordatenquelle einzuschalten und nach dem Empfang der Sensordaten auszuschalten. Somit kann der Empfang z.B. zeitlich getaktet und mit den Sensordatenquellen, also z.B. den Kommunikationseinrichtungen von Messeinheiten, synchronisiert, durchgeführt werden, wobei das Empfangen nur zu den Zeiten stattfindet, zu denen die Sensordatenquellen die Sensordaten übertragen. Beispielsweise kann das erste Kommunikationsmodul eingeschaltet werden und eingeschaltet bleiben, bis von allen Sensordatenquellen Daten eines Messzyklus übertragen wurden, oder es kann zum Empfang eines Datensatzes von einer Sensordatenquelle für jede Sensordatenquelle separat ein- und wieder ausgeschaltet werden.

Gemäß einer Ausführungsform weist das Gateway weiterhin ein Zeitmodul auf, das eingerichtet ist, den Prozessor vor dem Einschalten des ersten Kommunikationsmoduls einzuschalten und nach dem Ausschalten des ersten Kommunikationsmoduls oder des zweiten Kommunikationsmoduls auszuschalten. Insbesondere ist der Prozessor gemäß einer Ausführungsform eingerichtet, das Ein- und Ausschalten des zweiten Kommunikationsmoduls und/oder des ersten Kommunikationsmoduls gemäß einer konfigurierbaren zeitlichen Folge basierend auf den Zeitsignalen des Zeitmoduls vorzunehmen.

Hierbei wird unter "Ausschalten" bzw. "Einschalten des Prozessors" verstanden, dass der Prozessor vollständig zum Beispiel über die Versorgungsspannung ausgeschaltet wird, oder Teile des Prozessors deaktiviert sind, und die Deaktivierung bzw. Aktivierung durch z.B. den Spannungszustand auf einer Signalleitung gesteuert werden kann.

In einem Szenario kann das Zeitmodul z.B. eine Signalleitung aufweisen, die geeignet ist, die Stromversorgung des Prozessors bereitzustellen. Sobald dem Prozessor Strom zur Verfügung gestellt wird, kann er sich initialisieren bzw. booten und die Kommunikationsprozessierung sowie das Sammeln der Sensordaten durchführen. Das Zeitmodul könnte auch ein Signal an einen sich im Energiesparmodus oder im Ruhemodus befindlichen Prozessor senden, der durch ein Aufwachsignal oder einen Aufwachbefehl wieder vollständig eingeschaltet wird.

Gemäß einer weiteren Ausführungsform ist das Zeitmodul eingerichtet, die mindestens eine Sensordatenquelle mit dem Zeitmodul zu synchronisieren und ein Sendeintervall der Sensordatenquelle zu bestimmen.

Das Zeitmodul kann weitere Aufgaben übernehmen, wie das zeitliche Steuern des Ein- bzw. Ausschaltens der Kommunikationsmodule, sowie die Synchronisation mit den Sensordatenquellen. Die Synchronisation betreffend kann beispielsweise ein Messgerät, d.h. ein Sensor mit einer Kommunikationseinheit, sich z.B. über NFC oder über eine weitere drahtlose oder kabelgebundene Schnittstelle bei dem Gateway anmelden und sich als Teil dieses Vorgangs mit dem Gateway synchronisieren. Das Zeitmodul kann dazu z.B. eine Echtzeituhr, Timer, Logikschaltungen und/oder einen einfachen Prozessor aufweisen und kann auch mehrere Signalausgangsleitungen aufweisen, um z.B. das Empfangsmodul, den Prozessor und das Sendemodul getrennt ein- bzw. auszuschalten.

Eine Synchronisation der Sensordatenquellen mit dem Gateway ist weiterhin durch bekannte Synchronisationstechniken mit z.B. Signalen der Satellitennavigation oder Zeitsender wie DCF77 möglich. Die Synchronisierung bzw. erneute Synchronisierung kann z.B. in festgelegten Zeitintervallen erfolgen, die durch das Zeitmodul überwacht werden.

Das zeitliche Steuern des Ein- bzw. Ausschaltens der Kommunikationsmodule betreffend kann der Prozessor zum Beispiel das Zeitmodul abfragen, ob ein Timer abgelaufen ist. Ein Timer kann prinzipiell auch in dem Prozessor implementiert sein und das Zeitmodul liefert die Zeitbasis, also z.B. den Takt für den Prozessor und damit den Timer im Prozessor. Jedoch wird auch ein Timer außerhalb des Prozessors, also im Zeitmodul, benötigt, um z.B. den ausgeschalteten Prozessor zu vorbestimmten Zeitpunkten einzuschalten.

Gemäß einer Ausführungsform weist das Gateway einen integrierten Energiespeicher auf, und das Gateway wird zu seinem Betrieb von dem integrierten Energiespeicher versorgt. Der integrierte Energiespeicher kann z.B. eine Batterie oder ein Akkumulator sein. Aufgrund der hier beschriebenen Konfigurationen ist der Energiebedarf so gering, dass keine externe Energiequelle notwendig ist. Insbesondere kann auf eine drahtgebundene Stromversorgung verzichtet werden, wodurch das Gateway äußerst flexibel im Feld aufgestellt werden kann. Gemäß einem Ausführungsbeispiel bezieht das Gateway seine Energie oder einen Teil seiner Energie aus der Umwelt, wie z.B. mittels eines Solarmoduls durch Sonnenlicht, wobei die gewonnene elektrische Energie wiederum in einer Batterie oder einem Akkumulator gespeichert werden kann. Die Verwendung einer Batterie reduziert außerdem den Schaltungsaufwand zur Bereitstellung der erforderlichen Niedervolt-Betriebsspannung gegenüber einem Netzanschluss.

Gemäß einer Ausführungsform ist der Prozessor eingerichtet, das erste Kommunikationsmodul gemäß einem oder mehreren der Netzwerkprotokolle Bluetooth LE, LoRa (Long Range Wide Area Network), Symphony Link, Weightless, Wi-Fi HaLow (WLAN-Standard 802.11 ah), Dect ULE (Digital Enhanced Cordless Telecommunications Ultra Low Energy), M-Bus Wireless, Wireless HART oder Mioty zu betreiben, und das zweite Kommunikationsmodul gemäß einem oder mehreren der Kommunikationsstandards 1G, 2G, 3G bzw. GSM, 4G bzw. UMTS, 5G bzw. IoT, Sigfox, Waviot, RPMA, NB-IOT, LTE-M, oder CAT-M1 zu betreiben. Neben diesen dem Fachmann bekannten Protokollen können auch weitere Protokolle, z.B. proprietäre oder zukünftige Protokolle verwendet werden. Gemäß einer Ausführungsform ist das Gateway in eine Sensordatenquelle integriert. Hierdurch kann Hardware eingespart werden, da nur ein Gehäuse benötigt wird, und evtl. die gleiche Energiequelle verwendet werden kann. Zudem können die Sensordaten über eine Kabelverbindung oder eine festverdrahtete Verbindung an den Prozessor übertragen werden, wodurch eine drahtlose Kommunikationseinheit des Sensors entfallen kann. Da die drahtgebundene Übertragung in diesem Fall sowohl auf Seiten des Sensors als auch auf Seiten des Gateways mit weniger Energie erfolgt, wird der Energieverbrauch zusätzlich reduziert. Ferner wird ein zusätzlicher Aufstellungsstandort eingespart.

Erfindungsgemäß ist der Prozessor ferner eingerichtet, die gesammelten Daten nach dem Senden zu löschen, so dass der Speicher wieder frei wird und keine bereits gesendeten Daten erneut gesendet werden. Der Speicher kann ein nichtflüchtiger Speicher oder flüchtiger Speicher sein. Eine günstige Speicherart ist beispielsweise ein Ringspeicher bzw. Ringpuffer. In diesem Fall wird das Löschen durch das Setzen eines aktuellen, gültigen Speicherbereiches und Überschreiben der alten Daten realisiert.

Gemäß einem zweiten Aspekt wird ein Verfahren zum Empfangen und Weiterleiten von Sensordaten in einem Gateway vorgeschlagen, bei dem das Gateway ein Zeitmodul, einen Prozessor, ein erstes Kommunikationsmodul und ein zweites Kommunikationsmodul aufweist und wobei das Zeitmodul Zeitwerte ausgibt. Das Verfahren umfasst die folgenden Schritte:
In einem Schritt S3 wird der Zeitwert des Zeitmoduls mit einem ersten vorbestimmten Wert verglichen. Im nächsten Schritt S4 werden Sensordaten durch das erste Kommunikationsmodul empfangen. In einem weiteren Schritt S5 werden die empfangenen Sensordaten durch den Prozessor gesammelt und zwischengespeichert, wenn der Zeitwert dem ersten vorbestimmten Wert entspricht. Im einem nachfolgenden Schritt S7 wird überprüft, ob ein Schwellwert für die Anzahl an Daten oder ein zweiter vorbestimmter Zeitwert des Zeitmoduls überschritten wird, und wenn der Schwellwert für die Anzahl an Daten oder der zweite vorbestimmte Zeitwert überschritten wird, werden folgende Schritte S8-S1 1 durchgeführt:
S8 Einschalten des zweiten Kommunikationsmoduls durch den Prozessor,
S9 Senden der zwischengespeicherten Daten während einer Sendephase durch das zweite Kommunikationsmodul,
S10 Ausschalten des zweiten Kommunikationsmoduls durch den Prozessor,
S11 Löschen der zwischengespeicherten Daten durch den Prozessor.

Somit werden Sensordaten gesammelt, bis ein Zeitwert erreicht ist, oder eine vorbestimmte Anzahl an Daten gesammelt wurde, um die Sensordaten durch das zweite Kommunikationsmodul zu senden. Das zweite Kommunikationsmodul wird hierfür vor dem Senden durch den Prozessor eingeschaltet und nach dem Senden wieder durch den Prozessor ausgeschaltet. Danach werden die gesammelten Sensordaten gelöscht und der Zähler für die Anzahl der Daten zurückgesetzt, oder das Zeitmodul setzt zum Beispiel einen Timer zurück. Das Zeitmodul kann auch so eingerichtet sein, dass es zu bestimmten Zeitpunkten, zum Beispiel jede volle Stunde, ein Signal bereitstellt, das signalisiert, dass die Sensordaten gesendet werden sollen.

Gemäß einer Ausführungsform weist das Verfahren vor dem Schritt S3 die folgenden Schritte auf:
S2 Starten des Prozessors durch das Zeitmodul und S3 Einschalten des ersten Kommunikationsmoduls durch den Prozessor.
Weiterhin weist das Verfahren gemäß dieser Ausführungsform nach dem Schritt S3 den Schritt S6, Ausschalten des ersten Kommunikationsmoduls durch den Prozessor, auf, und vor dem Wiederholen des Schrittes S1 den Schritt S12, Ausschalten des Prozessors durch das Zeitmodul.

Das heißt, der Prozessor wird durch das Zeitmodul vor dem Empfang der Daten eines Sensors oder den Daten aller Sensoren eines Messzyklus eingeschaltet. Sind noch nicht genügend Daten gesammelt oder ist der Zeitpunkt zum Senden der Daten durch das zweite Kommunikationsmodul noch nicht erreicht, wird der Prozessor nach dem Empfang wieder ausgeschaltet, bis er für den Empfang der Daten des nächsten Sensors oder den Daten des nächsten Messzyklus wieder von dem Zeitmodul eingeschaltet wird. Sind hingegen genügend Daten gesammelt, oder ist der Zeitpunkt zum Senden der Daten erreicht, bleibt der Prozessor eingeschaltet, um die Daten über das zweite Kommunikationsmodul zu senden und wird erst danach wieder ausgeschaltet, bis er für den nächsten Empfang wieder von dem Zeitmodul eingeschaltet wird.

Gemäß einer weiteren Ausführungsform des Verfahrens umfasst das Empfangen von Sensordaten während eines Sensordatenübermittlungsintervalls in Schritt S4 das Empfangen gemäß einem oder mehrerer der Netzwerkprotokolle Bluetooth LE, LoRa, Symphony Link, weightless, Wi-Fi, HaLow, DECT ULE, M-Bus Wireless, Wireless HART oder Mioty, und das Senden der zwischengespeicherten Daten in Schritt S9 das Senden gemäß einem oder mehreren der Kommunikationsstandards 1G, 2G (GSM/GPRS/EDGE), 3G (UMTS/HSPA/LTE), 4G (LTE Advanced/Pro), 5G (IoT), Sigfox, Waviot, RPMA, NB-IOT, LTE-M, oder CAT-M1.

Gemäß einem dritten Aspekt leitet ein Programmelement, das, wenn es auf einem Prozessor eines Gateways ausgeführt wird, das Gateway an, die Schritte gemäß dem oben beschriebenen Verfahren durchzuführen.

Gemäß einem vierten Aspekt wird ein computerlesbares Medium bereitgestellt, auf welchem ein oben ausgeführtes Programmelement gespeichert ist.

Im Folgenden werden Ausführungsbeispiele der Erfindung anhand der schematischen Zeichnungen näher erläutert. Hierbei zeigt
Figur 1 ein Beispiel für die Erfassung von Sensormesswerten,
Figur 2 ein weiteres Beispiel für die Erfassung von Sensormesswerten,
Figur 3 ein drittes Beispiel für die Erfassung von Sensormesswerten,
Figur 4 die Erfassung von Sensormesswerten gemäß einem Ausführungsbeispiel,
Figur 5 eine Ablaufsequenz zum Betrieb des Gateways gemäß eines ersten Ausführungsbeispiels,
Figur 6 eine Ablaufsequenz zum Betrieb des Gateways gemäß eines zweiten Ausführungsbeispiels,
Figur 7 ein Blockdiagramm des Gateways gemäß einem Ausführungsbeispiel,
Figur 8 ein Ablaufdiagramm gemäß einem Ausführungsbeispiel.

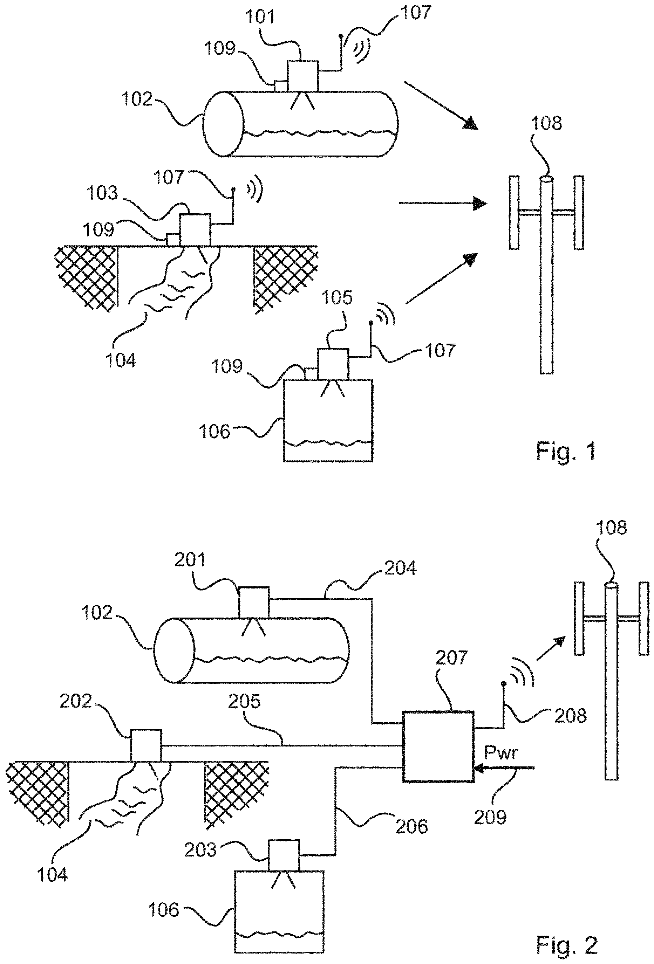

Figur 1 zeigt ein Beispiel für die Erfassung der Messwerte dezentral verteilter Einzelsensoren 101, 103, 105. Das vorgestellte Beispiel beinhaltet einen ersten Füllstandsensor 101, welcher den Pegel in einem Lagertank 102 erfassen soll, einen zweiten Füllstandsensor 103, welcher an einer Brücke montiert den Gewässerpegel eines Flusses 104 überwachen soll, sowie einen dritten Füllstandsensor 105, welcher den Füllstand in einem mobilen Behälter 106, beispielsweise einem IBC (Intermediate Bulk Container, Großpackmittelbehälter) 106, erfassen soll. Die Sensoren 101, 103 und 105 können weit verteilt, im vorliegenden Beispiel auch mit sich verändernder Distanz voneinander positioniert sein. Eine klassische Erfassung der Messwerte mit Hilfe drahtgebundener Systeme ist durch die örtliche Verteilung mit variabler Distanz nur schwierig zu realisieren. Bestehende Sensoren werden daher vorzugsweise über Erweiterungsmodule mit drahtlosen Kommunikationsinterfaces, vorzugsweise mit GSM-Interfaces 107, in die Lage versetzt, ihre jeweiligen Messwerte drahtlos an ein öffentliches Mobilfunknetz 108 zu übertragen. Im Allgemeinen ist die Kommunikation mit öffentlich verfügbaren Mobilfunknetzen mit einer hohen Anzahl an Verwaltungsbytes behaftet, zudem sind kommerziell verfügbare Mobilfunkmodule recht energieintensiv. Aus diesem Grund ist ein Betrieb der Sensoren 101, 103, 105 nur durch Kombination mit extern zugeführter Energie 109 möglich. Hierbei kann eine Anbindung an das Stromnetz vorgesehen sein.

Sind die lokalen Entfernungen zwischen den zu überwachenden Anwendungen 102, 104, 106 überschaubar, die Distanz zu einer entfernten Steuer- und/oder Überwachungseinrichtung jedoch groß, so wird typischerweise eine Anbindung der Sensoren 201, 202, 203 entsprechend der Darstellung der Figur 2 vorgenommen. Zentrales Kommunikationsinterface ist hierbei die Gatewayeinheit 207, welche über eine Versorgungsleitung 209 mit Energie versorgt wird. Die Gatewayeinheit 207 stellt über mehrere drahtgebundene Schnittstellen 204, 205, 206 Energie bereit, mit welcher die Sensoren 201, 202, 203 versorgt werden. Die Schnittstellen 204, 205, 206 sind üblicherweise gleichzeitig Kommunikationsleitungen, über die die Messwerte der Sensoren in analoger und/oder digitaler Form (4..20 mA gemäß dem Highway Addressable Remote Transducer-, HART-Protokoll) an das Gateway 207 rückübertragen werden. Das Gateway beinhaltet ein Kommunikationsmodul 208, welches über das Mobilfunknetz mit einem externen, öffentlich zugänglichen Funkmast 108 in Verbindung steht. Über das Mobilfunknetz werden die Mess- und/oder Diagnosedaten der Sensoren 201, 202, 203 in eine hier nicht dargestellte Cloud übertragen, und sind somit auch an weit entfernten Orten zu Zwecken der Steuerung und/oder Überwachung verfügbar. Bei dieser Einrichtung ist eine drahtgebundene Kommunikationsverbindung 206 zu beispielsweise mobilen Sensoren 203 notwendig, was eine erhebliche Einschränkung in Bezug auf die Mobilität der Behälter 106 mit sich bringt.

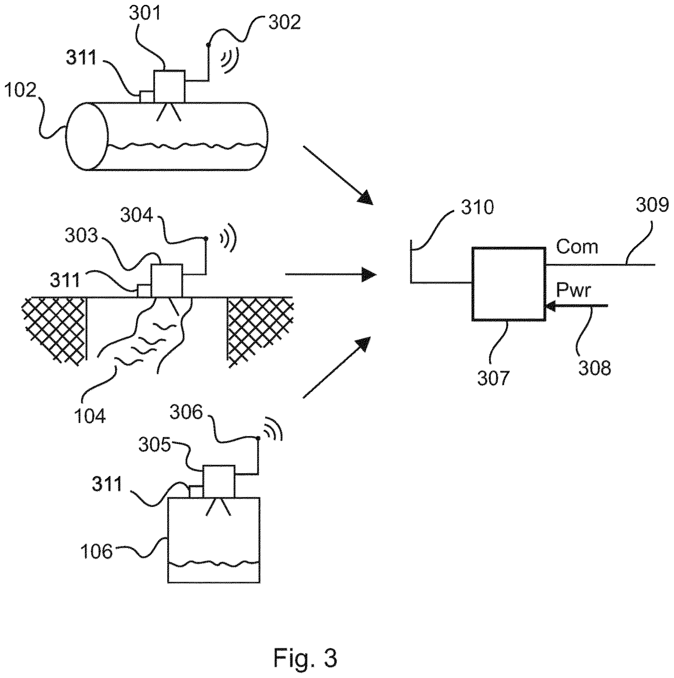

Figur 3 zeigt ein weiteres Beispiel einer Anordnung mit Sensoren und einem Gateway, bei der sensorseitig eine verbesserte Funkkommunikation verwendet wird, die durch energiesparende Schaltkreise möglich ist. Die Sensoren 301, 303, 305 übermitteln ihre jeweils ermittelten Messwerte über ein LPWAN- (Low Power Wide Area Network-) Kommunikationsmodul 302, 304, 306 an ein LPWAN fähiges Gateway 307. Der Energiebedarf für diese Kommunikation ist extrem klein, weshalb die Sensoren 301, 303, 305 durch Integration einer Batterie 311 oder eines Akkus 311 Lebensdauern von typischerweise 10 Jahren oder mehr erreichen können. Das LPWAN Gateway 307 kann über eine Schnittstelle 308 von außen mit der für den Betrieb benötigten Leistung versorgt werden, beispielsweise durch Power over Ethernet. Über eine Kommunikationsleitung 309, beispielsweise eine LAN Verbindung 309, werden die Messwerte in ein lokales Netz oder eine global verfügbare Cloud weitergeleitet. Da die Kommunikation über LPWAN üblicherweise mehrere Kilometer überbrücken kann, kann eine Anordnung gemäß der Figur 3 einen Batteriebetrieb der Sensoren 301, 303, 305 ermöglichen, was zu extrem einfacher Installation und geringem Wartungsaufwand beiträgt. Bei einer derartigen Anordnung ist eine Installation des Gateways 307 im Bereich einer Spannungsversorgung 308 notwendig. Speziell bei der Überwachung von Flüssen kann eine Spannungsversorgung des Gateways oftmals nicht realisiert werden.

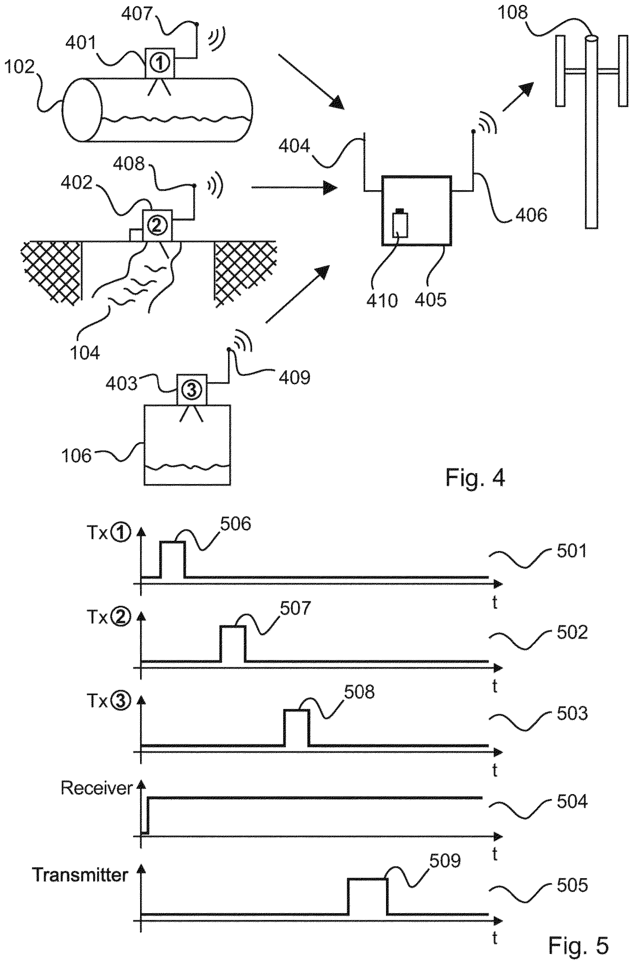

Figur 4 zeigt eine Anordnung mit Sensoren und einem Gateway gemäß einem Ausführungsbeispiel. Die verteilten Sensoren 401, 402, 403 übermitteln mit Hilfe einer LPWAN-Schnittstelle 407, 408, 409 oder einer PAN- (Personal Area Network) Schnittstelle 407, 408, 409 ihre Mess- und/oder Diagnosewerte an das Gateway 405. Mit Hilfe einer geeigneten PAN- und/oder LPWAN- Schnittstelle 404 werden die von den Sensoren 401, 402, 403 übermittelten Daten empfangen und zwischengespeichert. Die Entfernung der vorzugsweise batteriebetriebenen Sensoren 401, 402, 403 zum Gateway 405 kann mehr als 10 m oder auch mehr als einige km betragen. Das Gateway übermittelt die zwischengespeicherten Informationen zu einem späteren Zeitpunkt unter Verwendung eines öffentlich verfügbaren Mobilfunknetzes und einer geeigneten Kommunikationseinrichtung 406 an eine öffentlich zugängliche Mobilfunkbasisstation, welche die Daten in eine Cloud weiterleitet. Es kann vorgesehen sein, während einer Weiterleitung der Daten an das Mobilfunknetz 108 die Kommunikationseinheit 404 zum Empfangen von Daten der Sensoren 401, 402, 403 zu deaktivieren. Zudem werden während einer Kommunikation mit dem Mobilfunknetz die Daten zumindest zweier Sensoren 401, 402, 403 gemeinsam in die Cloud übertragen. Durch Kombination dieser Maßnahmen kann erreicht werden, dass das Gateway komplett aus einem im Gateway integrierten Energiespeicher 410 versorgt werden kann, und folglich nicht mehr an eine externe Versorgung 308 angeschlossen werden muss.

Als Kommunikationsstandard 407 für die Übertragung der Daten von den Sensoren 401, 402, 403 zum Gateway kommen insbesondere Bluetooth LE, LoRa (Long Range Wide Area Network), Symphony Link, Weightless, Wi-Fi HaLow (WLAN-Standard 802.11 ah), Dect ULE (Digital Enhanced Cordless Telecommunications Ultra Low Energy), M-Bus Wireless, Wireless HART oder auch Mioty zum Einsatz. Die vorgenannten Standards erlauben den Aufbau privater Netzwerke, also insbesondere die energieeffiziente Übertragung von Sensordaten zu einem entfernt liegenden Gateway. Als Kommunikationsstandard 406 für die Übertragung gesammelter Sensordaten von einem erfindungsgemäßen Gateway 405 zu einem öffentlichen Kommunikationsnetz 108 kommen neben den etablierten Mobilfunkstandards 1G, 2G, 3G, 4G oder auch 5G insbesondere auch Standards wie Sigfox, Waviot, RPMA, NB-IOT, LTE-M oder CAT-M1 zum Einsatz. Es kann auch vorgesehen sein, dass das Gateway 405 mehrere Ein- und/oder Ausgabestandards ausgewählt aus den zuvor genannten Standards unterstützt und/oder mehrere Standards gleichzeitig realisiert.

Gemäß einem Ausführungsbeispiel werden Funkverbindungen gemäß dem LPWAN Standard verwendet, deren Spezifikation ein zumindest zeitweiliges Deaktivieren der Sende- und/oder Empfangs - Kommunikationsmodule erlauben, um somit ein Höchstmaß an Energieeffizienz zu erreichen. In Verbindung mit einer entsprechend implementierten und im Gerät 405 integrierten Steuereinheit kann ein Betriebsmodus des Gateways realisiert werden, der einen extrem niedrigen Energieverbrauch und damit eine vollständige Versorgung des Gerätes 405 aus einem integrierten Energiespeicher 410 erreichen kann.

Figur 5 zeigt einen Ablauf zum Betrieb des Gateways 405 gemäß einem ersten Ausführungsbeispiel. Das erste Kommunikationsmodul 404 gemäß z.B. dem LPWAN-Protokoll ist in diesem Beispiel nach dem Booten des Gateways kontinuierlich aktiviert 504. In einem ersten Zeitraum 506 übermittelt der Sensor 401 seine Daten an das Gateway. Dieses speichert die Daten in einem integrierten Speicherbereich. In einem zweiten Zeitraum 507 übermittelt der Sensor 402 seine Daten. In gleicher Weise werden in einem dritten Zeitraum 508 die Daten des Sensors 403 übermittelt, und lokal im Gateway gespeichert. Die Steuereinheit des Gateways aktiviert im Zeitraum 509 nun die zweite Kommunikationsschnittstelle 406, und baut eine Verbindung zu einem öffentlich verfügbaren Netz 108 auf, um die zuvor gesammelten und im Speicher hinterlegten Daten der Sensoren gebündelt und mit einer höheren Datenrate als im Empfangsfall an eine Cloud zu übermitteln. Sobald die Daten übermittelt sind, wird die Kommunikationseinheit 406 wieder deaktiviert, um die Energieressource 410 zu schonen.

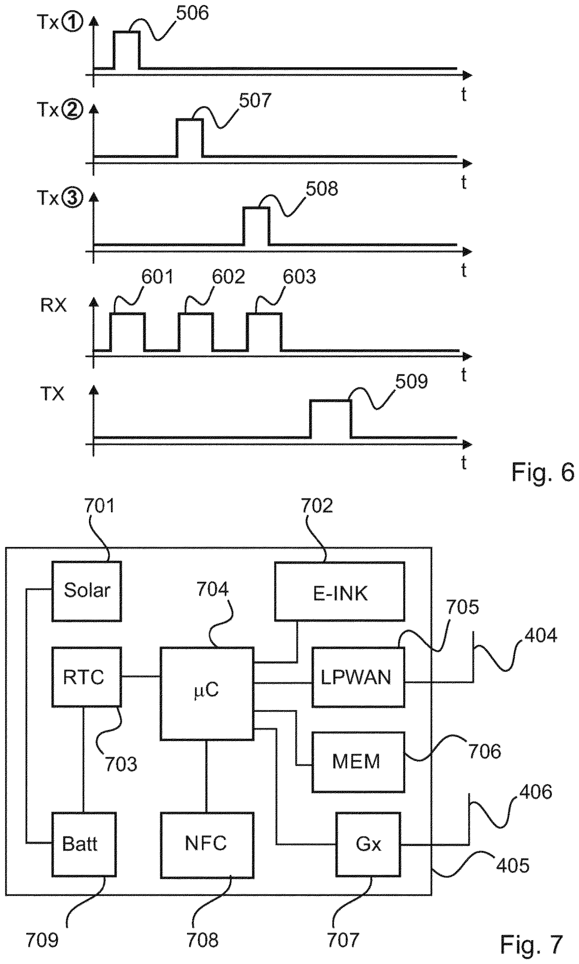

Figur 6 zeigt eine weitere erfindungsgemäße Ablaufsequenz, die durch eine dem Fachmann bekannte Kombination von Hard- und Softwareteilen innerhalb einer hier nicht dargestellten Steuereinheit im Gateway 405 erreicht werden kann. Sind sowohl die Sensoren 401, 402, 403 als auch das Gateway 405 durch Einbau einer Zeitbasis und durch vorab ausgetauschte Steuersignale zeitsynchronisiert, so kann die Steuereinrichtung des Gerätes 405 den LPWAN-Receiver 404 gezielt zu den jeweiligen Sendephasen 506, 507, 508 der angeschlossenen oder angemeldeten Sensoren 401, 402, 403 aktivieren, und in den entsprechenden Abschnitten 601, 602, 603 Daten empfangen und lokal abspeichern. Die Daten werden wiederum im Zeitabschnitt 509 in eine externe Cloud übertragen.

Figur 7 zeigt den grundsätzlichen Aufbau eines Gateways 405 gemäß einem Ausführungsbeispiel im Detail als Blockdiagramm. Das Gateway beinhaltet eine Batterie und/oder einen Akku 709 zur Bereitstellung der für den Betrieb notwendigen Energie. Ein Zeitgeberbaustein 703, vorzugsweise eine Echtzeituhr, bootet zu vorgebbaren Zeitpunkten 601, 602, 603, 509 den Prozessor 704. Dieser kann über die erste Kommunikationsschnittstelle 705, 404 Daten von zumindest einem Sensor empfangen, und im Speicher 706 ablegen. Darüber hinaus kann der Prozessor 704 die gesammelten Daten aus dem Speicher 706 wieder auslesen, und über eine zweite Kommunikationsschnittstelle 707, 406 nach außen hin an ein öffentlich verfügbares Netz übertragen. Eine optionale Anzeigeeinheit 702 kann der Darstellung von Statusinformationen dienen, wobei hierzu vorzugsweise ein E-Ink-Display 702 vorgesehen sein kann, welches die dargestellten Informationen auch nach Abschalten des Prozessors 704 und/oder der Versorgungsspannung fortwährend anzeigen kann. Es kann darüber hinaus vorgesehen sein, mittels einer RFID-Technik, beispielsweise mit Hilfe einer NFC-(Near Field Communication-) Einheit 708 das An- und Abmelden von Sensoren 401, 402, 403 sowie das Vorgeben von Kommunikationszeitschlitzen 506, 507, 508 durch einfaches Annähern der Sensoren an das Gateway in besonders komfortabler Art und Weise zu vereinfachen. Sollten die zuvor genannten Maßnahmen die in der Anwendung angestrebte Lebensdauer des Gerätes 405 nicht erreichen, so kann durch einen optionalen Einbau einer Energiegewinnungs- (Energy-Harvesting-) Einheit 701, beispielsweise eines Solarmoduls 701, die Laufzeit des Gerätes 405 nahezu beliebig verlängert werden.

Die zuvor aufgezeigten Komponenten erlauben die einfache und kostengünstige Umsetzung eines komplett autark betriebenen Gateways als Mittler zwischen einem privaten, lokalen Sensornetzwerk und einem öffentlichen Netzwerk. Es sei darauf hingewiesen, dass das Gateway 405 auch Teil eines Sensors 401, 402, 403 sein kann, welcher quasi als Master die Messwerte der Sensoren seiner Umgebung sammeln und weiterleiten kann. Es kann vorgesehen sein, dass das Master-Gateway die Sensoren in seiner Umgebung automatisch erkennen und einbinden kann.

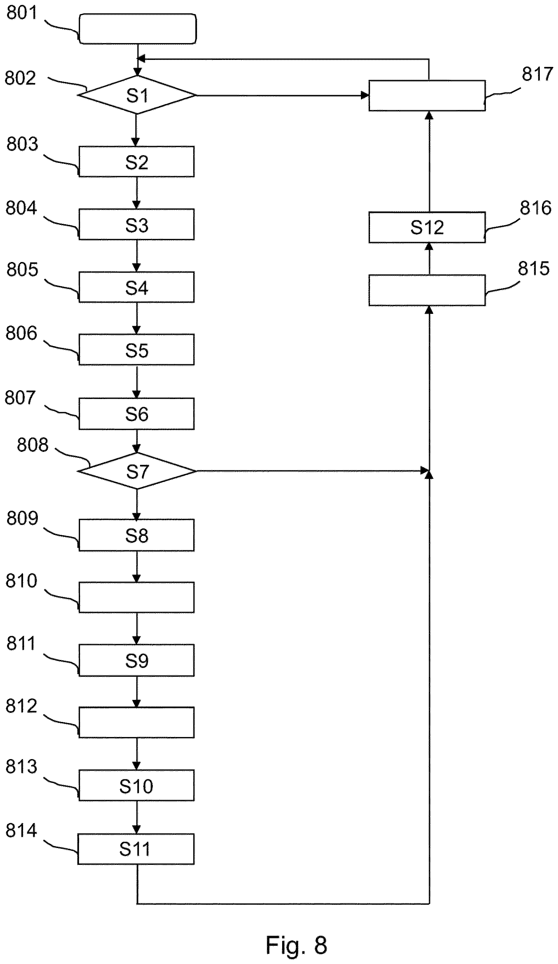

Figur 8 zeigt einen beispielhaften Ablauf, mit welchem ein besonders energiesparender Betrieb des Gerätes 405 ermöglicht wird. Das Verfahren beginnt im Startzustand 801. Im Schritt S 1 802 überprüft die Echtzeituhr, ob eine vorab parametrierte Aktivierungszeit T_akt 601, 602, 603 erreicht wurde. Ist dies nicht der Fall, so wird durch Übergang in den Verfahrensschritt 816 eine weitere Zeitspanne abgewartet. Andernfalls wird im Schritt S2 803 der Prozessor 704 mit Spannung versorgt und/oder aktiviert. Dieser aktiviert im Schritt S3 804 die erste Kommunikationseinheit 705, 404, um im Schritt S4 805 Daten von einem Sensor 401, 402, 403 zu empfangen. Die Daten werden im Schritt S5 806 in dem Speicher 706 abgelegt. Im Schritt S6 807 wird die erste Kommunikationseinheit 705 wieder deaktiviert, um Energie zu sparen. Im Schritt S7 808 wird überprüft, ob genügend Daten im Speicher 706 abgelegt sind, um eine Übertragung der gesammelten Daten an eine öffentliche Netzinfrastruktur zu starten. Ein Kriterium hierzu kann ein Vorhandensein genügend vieler Sensordaten sein. Es kann aber auch vorgesehen sein, die Übermittlung über die zweite Kommunikationsschnittstelle 707, 406 in vorgebbaren Zeitabschnitten zyklisch zu aktivieren. Sind nicht genügend Daten vorhanden, so wird im Schritt 815 die Echtzeituhr 703 mit dem nächsten Aktivierungszeitpunkt 601, 602, 603 parametriert, und im Schritt S12 816 der Prozessor 704 deaktiviert und/oder spannungslos geschaltet. Nach einer Wartezeit 817 wird wieder S1 802 ausgeführt. Sind hingegen genügend Daten vorhanden, so wird nach Übergang in den Schritt S8 809 die zweite Kommunikationsschnittstelle 707, 405 aktiviert, woraufhin im Schritt 810 eine Einwahl in ein öffentliches Netz stattfindet. Hierbei werden verhältnismäßig viele Kommunikationsbytes zur Übermittlung von Anmeldeinformationen benötigt, welche oftmals ein Vielfaches der Nutzdaten der Sensoren 401, 402, 403 betragen. Im Schritt S9 811 werden die gesammelten Daten eines oder mehrerer Sensoren aus einer oder mehrerer Messungen der Sensoren 401, 402, 403 an einen Zielserver oder allgemein an einen Cloudserver übertragen. Da die Datenrate hierbei im allgemein höher ist als die Datenrate bei der LPWAN-Kommunikation über die erste Kommunikationseinheit 404, 705 wird hierzu nur wenig Zeit und damit wenig Energie benötigt. Im Schritt 812 meldet sich das Gateway 405 wieder aus dem Netz 108 ab und im Schritt S10 813 deaktiviert der Prozessor 704 die zweite Kommunikationseinheit 707. Um ein neues Datensammeln zu beginnen, werden im Schritt S11 814 die bisherigen, im Speicher 706 abgelegten Sensordaten wieder zurückgesetzt. Nach Übergang in die Schritte 815, Parametrierung der Echtzeituhr, S12 816, Deaktivieren des Prozessors und 817, Abwarten einer eingestellten Zeit, beginnt das Verfahren wieder von neuem.

Mit den Prinzipien und Ausführungsbeispielen der vorliegenden Erfindung kann somit ein vollkommen autonom arbeitendes Kommunikationsgateway bereitgestellt werden, welches seine für den Betrieb notwendige Energie vollständig aus zumindest einem integrierten Energiespeicher bezieht. In Verbindung mit den ergänzend vorgeschlagenen Betriebsmodi kann gleichzeitig eine lange Lebensdauer des Gateways realisiert werden.

## Patentansprüche

1. Gateway (405) zur Sensordatenweiterleitung, aufweisend
ein erstes Kommunikationsmodul (101), eingerichtet zum Empfangen von Sensordaten von mindestens einer Sensordatenquelle,
einen Prozessor (704), der mit dem ersten Kommunikationsmodul (101) verbunden ist und zum Sammeln und Zwischenspeichern der Sensordaten eingerichtet ist,
einen Speicher zum Speichern der zwischengespeicherten Sensordaten;
ein zweites Kommunikationsmodul (104), das mit dem Prozessor (104) verbunden ist und zum Senden der gesammelten und in dem Speicher zwischengespeicherten Sensordaten an einen Zielserver eingerichtet ist, wobei
der Prozessor (704) eingerichtet ist, wenn ein Schwellwert für die Anzahl an Daten im Speicher oder ein zweiter vorbestimmter Zeitwert eines Zeitmoduls des Gateways überschritten wird, das zweite Kommunikationsmodul zum Senden der gesammelten Daten einzuschalten und nach dem Senden der gesammelten Daten auszuschalten;
wobei der Prozessor eingerichtet ist, das zweite Kommunikationsmodul gemäß einem oder mehreren Kommunikationsstandards zu betreiben, und wobei der der Prozessor ferner eingerichtet ist, die gesammelten Daten nach dem Senden zu löschen.

2. Gateway (405) nach Anspruch 1,
wobei das erste Kommunikationsmodul dauerhaft eingeschaltet ist.

3. Gateway (405) nach Anspruch 1,
wobei der Prozessor (704) ferner eingerichtet ist, das erste Kommunikationsmodul (705) vor dem Empfang der Sensordaten der mindestens einen Sensordatenquelle einzuschalten und nach dem Empfang der Sensordaten auszuschalten.

4. Gateway (405) nach einem der vorherigen Ansprüche, wobei das Gateway (405) einen integrierten Energiespeicher (709) aufweist, und das Gateway (405) zu seinem Betrieb von dem integrierten Energiespeicher (709) versorgt wird.

5. Gateway (405) nach einem der vorherigen Ansprüche, wobei der Prozessor (704) eingerichtet ist, das erste Kommunikationsmodul (705) gemäß einem oder mehreren der Netzwerkprotokolle Bluetooth LE, LoRa, Symphony Link, weightless, Wi-Fi, HaLow, DECT ULE, M-Bus Wireless, Wireless HART oder Mioty zu betreiben, und wobei der Prozessor (704) eingerichtet ist, das zweite Kommunikationsmodul (707) gemäß einem oder mehreren der Kommunikationsstandards 1G, 2G, 3G, 4G, 5G, Sigfox, Waviot, RPMA, NB-IOT, LTE-M, oder CAT-M1 zu betreiben..

6. Gateway (405) nach einem der vorherigen Ansprüche, wobei das Gateway (405) weiterhin ein Zeitmodul aufweist, das eingerichtet ist, den Prozessor (704) vor dem Einschalten des ersten Kommunikationsmoduls (705) einzuschalten und nach dem Ausschalten des ersten Kommunikationsmoduls (705) oder des zweiten Kommunikationsmoduls (707) auszuschalten.

7. Gateway (405) nach Anspruch 6, wobei der Prozessor (704) eingerichtet ist, das Ein- und Ausschalten des zweiten Kommunikationsmoduls (707) und/oder des ersten Kommunikationsmoduls (705) gemäß einer konfigurierbaren zeitlichen Folge basierend auf den Zeitsignalen des Zeitmoduls (703) vorzunehmen.

8. Gateway (405) nach Anspruch 6 oder 7, wobei das Zeitmodul (703) eingerichtet ist, die mindestens eine Sensordatenquelle mit dem Zeitmodul (703) zu synchronisieren und ein Sendeintervall der Sensordatenquelle zu bestimmen.

9. Gateway (405) nach einem der vorherigen Ansprüche, wobei das Gateway (405) in eine Sensordatenquelle integriert ist.

10. Verfahren zum Empfangen und Weiterleiten von Sensordaten in einem Gateway (405) nach Anspruch 1, das ein Zeitmodul aufweist, wobei das Zeitmodul Zeitwerte ausgibt, umfassend die Schritte:
(S 1) Vergleichen des Zeitwertes des Zeitmoduls mit einem ersten vorbestimmten Wert,
(S4) Empfangen von Sensordaten durch das erste Kommunikationsmodul (705),
(S5) Sammeln und Zwischenspeichern im Speicher von Sensordaten durch den Prozessor (704) wenn der Zeitwert dem ersten vorbestimmten Wert entspricht (703),
(S7) Überprüfen, ob ein Schwellwert für die Anzahl an Daten im Speicher oder ein zweiter vorbestimmter Zeitwert des Zeitmoduls überschritten wird, und wenn der Schwellwert für die Anzahl an Daten oder der zweite vorbestimmte Zeitwert überschritten wird:
(S8) Einschalten des zweiten Kommunikationsmoduls (707) durch den Prozessor (704),
(S9) Senden der zwischengespeicherten Daten an einen Zielserver während einer Sendephase durch das zweite Kommunikationsmodul (707),
(S10) Ausschalten des zweiten Kommunikationsmoduls (707) durch den Prozessor (704),
(S11) Löschen der zwischengespeicherten Daten durch den Prozessor (704).

11. Verfahren nach Anspruch 10, wobei das Verfahren vor dem Schritt (S3) die Schritte
(S2) Starten des Prozessors durch das Zeitmodul (703) und
(S3) Einschalten des ersten Kommunikationsmoduls (705) durch den Prozessor (704) aufweist, das Verfahren weiterhin nach dem Schritt (S3) den Schritt
(S6) Ausschalten des ersten Kommunikationsmoduls (705) durch den Prozessor (704) aufweist,
und wobei das Verfahren ferner vor dem Wiederholen des Schrittes (S1) den Schritt
(S12) Ausschalten des Prozessors (704) durch das Zeitmodul (703) aufweist.

12. Verfahren nach Anspruch 10 oder 11, wobei
das Empfangen von Sensordaten während eines Sensordatenübermittlungsintervalls in Schritt (S4) das Empfangen gemäß einem oder mehrerer der Netzwerkprotokolle Bluetooth LE, LoRa, Symphony Link, weightless, Wi-Fi, HaLow, DECT ULE, M-Bus Wireless, Wireless HART oder Mioty umfasst, und
das Senden der zwischengespeicherten Daten in Schritt (S9) das Senden gemäß einem oder mehreren der Kommunikationsstandards 1G, 2G, 3G, 4G, 5G, Sigfox, Waviot, RPMA, NB-IOT, LTE-M, oder CAT-M1 umfasst.

13. Programmelement, das, wenn es auf einem Prozessor (704) eines Gateways (405) ausgeführt wird, das Gateway (405) anleitet, die Schritte gemäß dem Verfahren nach einem der Ansprüche 10 bis 12 durchzuführen.

14. Computerlesbares Medium, auf welchem ein Programmelement nach Anspruch 13 gespeichert ist.

## Claims

1. Gateway (405) for sensor data forwarding, comprising
a first communication module (101) configured to receive sensor data from at least one sensor data source,
a processor (704), which is connected to the first communication module (101) and is set up to collect and temporarily store the sensor data,
a memory for storing the buffered sensor data;
a second communication module (104) connected to the processor (104) and configured to send the collected sensor data cached in the memory to a destination server, wherein
the processor (704) is configured, when a threshold value for the number of data in the memory or a second predetermined time value of a time module of the gateway is exceeded, to switch on the second communication module for transmitting the collected data and to switch it off after the collected data has been transmitted;
wherein the processor is configured to operate the second communication module according to one or more communication standards, and wherein the processor is further arranged to delete the collected data after transmission.

2. Gateway (405) according to claim 1,
wherein the first communication module is permanently switched on.

3. Gateway (405) according to claim 1,
wherein the processor (704) is further configured to switch on the first communication module (705) before receiving the sensor data from the at least one sensor data source and to switch it off after receiving the sensor data.

4. Gateway (405) according to one of the preceding claims, wherein the gateway (405) comprises an integrated energy storage (709), and the gateway (405) is supplied by the integrated energy storage (709) for its operation.

5. Gateway (405) according to one of the preceding claims, wherein the processor (704) is arranged to operate the first communication module (705) according to one or more of the network protocols Bluetooth LE, LoRa, Symphony Link, weightless, Wi-Fi, HaLow, DECT ULE, M-Bus Wireless, Wireless HART or Mioty, and wherein the processor (704) is set up to operate the second communication module (707) according to one or more of the communication standards 1G, 2G, 3G, 4G, 5G, Sigfox, Waviot, RPMA, NB-IOT, LTE-M, or CAT-M1..

6. Gateway (405) according to one of the preceding claims, wherein the gateway (405) further comprises a timing module arranged to switch on the processor (704) before switching on the first communication module (705) and to switch off the processor (704) after switching off the first communication module (705) or the second communication module (707).

7. Gateway (405) according to claim 6, wherein the processor (704) is arranged to perform the switching on and off of the second communication module (707) and/or the first communication module (705) according to a configurable time sequence based on the timing signals of the timing module (703).

8. Gateway (405) according to claim 6 or 7, wherein the timing module (703) is arranged to synchronize the at least one sensor data source with the timing module (703) and to determine a transmission interval of the sensor data source.

9. Gateway (405) according to one of the preceding claims, wherein the gateway (405) is integrated into a sensor data source.

10. Method for receiving and forwarding sensor data in a gateway (405) according to claim 1, comprising a time module, wherein the time module outputs time values, comprising the steps:
(S1) comparing the time value of the time module with a first predetermined value,
(S4) receiving sensor data by the first communication module (705),
(S5) collecting and buffering in the memory of sensor data by the processor (704) when the time value corresponds to the first predetermined value (703),
(S7) checking whether a threshold value for the number of data in the memory or a second predetermined time value of the time module is exceeded, and if the threshold value for the number of data or the second predetermined time value is exceeded:
(S8) switching on the second communication module (707) by the processor (704),
(S9) transmitting of the buffered data to a target server during a transmission phase by the second communication module (707),
(S10) switching off the second communication module (707) by the processor (704),
(S11) deleting of the temporarily stored data by the processor (704).

11. Method according to claim 10, wherein the method comprises, prior to step (S3), the steps of
(S2) starting the processor by the time module (703) and
(S3) switching on the first communication module (705) by the processor (704), the method further comprising, after step (S3), the step of
(S6) switching off the first communication module (705) by the processor (704),
and wherein the method further comprises, before repeating step (S1), step
(S12) switching off the processor (704) by the time module (703).

12. Method according to claim 10 or 11, wherein
receiving sensor data during a sensor data transmission interval in step (S4) comprises receiving according to one or more of Bluetooth LE, LoRa, Symphony Link, weightless, Wi-Fi, HaLow, DECT ULE, M-Bus Wireless, Wireless HART or Mioty network protocols, and
the transmitting of the cached data in step (S9) comprises transmitting according to one or more of 1G, 2G, 3G, 4G, 5G, Sigfox, Waviot, RPMA, NB-IOT, LTE-M, or CAT-M1 communication standards.

13. Program element which when executed on a processor (704) of a gateway (405), instructs the gateway (405) to perform the steps according to the method according to any one of claims 10 to 12.

14. Computer-readable medium on which a program element according to claim 13 is stored.

## Revendications

1. Passerelle (405) pour la transmission de données de capteur, présentant
un premier module de communication (101), conçu pour recevoir des données de capteur d'au moins une source de données de capteur,
un processeur (704) qui est relié au premier module de communication (101) et qui est conçu pour collecter et stocker temporairement les données de capteur,
une mémoire pour stocker les données de capteur stockées temporairement ;
un second module de communication (104) qui est relié au processeur (104) et qui est conçu pour envoyer les données de capteur collectées et stockées temporairement dans la mémoire à un serveur cible, dans laquelle
le processeur (704) est conçu, lorsqu'une valeur seuil pour le nombre de données dans la mémoire ou une seconde valeur de temps prédéterminée d'un module de temps de la passerelle est dépassée, pour activer le second module de communication pour l'envoi des données collectées et pour le désactiver après l'envoi des données collectées ;
dans laquelle le processeur est conçu pour faire fonctionner le second module de communication selon une ou plusieurs normes de communication, et dans laquelle le processeur est en outre conçu pour effacer les données collectées après leur envoi.

2. Passerelle (405) selon la revendication 1,
dans laquelle le premier module de communication est activé en permanence.

3. Passerelle (405) selon la revendication 1,
dans laquelle le processeur (704) est en outre conçu pour activer le premier module de communication (705) avant la réception des données de capteur de ladite au moins une source de données de capteur et pour la désactiver après la réception des données de capteur.

4. Passerelle (405) selon l'une des revendications précédentes, dans laquelle la passerelle (405) présente un accumulateur d'énergie intégré (709), et la passerelle (405) est alimentée par l'accumulateur d'énergie intégré (709) pour son fonctionnement.

5. Passerelle (405) selon l'une des revendications précédentes, dans laquelle le processeur (704) est conçu pour activer le premier module de communication (705) selon un ou plusieurs des protocoles de réseau Bluetooth LE, LoRa, Symphony Link, weightless, Wi-Fi, HaLow, DECT ULE, M-Bus Wireless, Wireless HART ou Mioty, et dans laquelle le processeur (704) est conçu pour faire fonctionner le second module de communication (707) selon une ou plusieurs des normes de communication 1G, 2G, 3G, 4G, 5G, Sigfox, Waviot, RPMA, NB-IOT, LTE-M ou CAT-M1.

6. Passerelle (405) selon l'une des revendications précédentes, dans laquelle la passerelle (405) présente en outre un module de temps conçu pour activer le processeur (704) avant l'activation du premier module de communication (705) et pour le désactiver après la désactivation du premier module de communication (705) ou du second module de communication (707).

7. Passerelle (405) selon la revendication 6, dans laquelle le processeur (704) est conçu pour effectuer l'activation et la désactivation du second module de communication (707) et/ou du premier module de communication (705) selon une séquence temporelle configurable basée sur les signaux de temps du module de temps (703).

8. Passerelle (405) selon la revendication 6 ou 7, dans laquelle le module de temps (703) est conçu pour synchroniser ladite au moins une source de données de capteur avec le module de temps (703) et pour déterminer un intervalle d'envoi de la source de données de capteur.

9. Passerelle (405) selon l'une des revendications précédentes, dans laquelle la passerelle (405) est intégrée dans une source de données de capteur.

10. Procédé de réception et de transmission de données de capteur dans une passerelle (405) selon la revendication 1, qui présente un module de temps, le module de temps délivrant des valeurs de temps, comprenant les étapes consistant à :
(S1) comparer la valeur de temps du module de temps à une première valeur prédéterminée,
(S4) recevoir des données de capteur par le premier module de communication (705),
(S5) collecter et stocker temporairement dans la mémoire les données de capteur par le processeur (704) lorsque la valeur de temps correspond à la première valeur prédéterminée (703),
(S7) vérifier si une valeur seuil pour le nombre de données dans la mémoire ou une seconde valeur de temps prédéterminée du module de temps est dépassée, et, si la valeur seuil pour le nombre de données ou la seconde valeur de temps prédéterminée est dépassée :
(S8) activer le second module de communication (707) par le processeur (704),
(S9) envoyer les données stockées temporairement à un serveur cible pendant une phase d'envoi par le second module de communication (707),
(S10) désactiver le second module de communication (707) par le processeur (704),
(S11) effacer les données stockées temporairement par le processeur (704).

11. Procédé selon la revendication 10, dans lequel le procédé présente, avant l'étape (S3), les étapes consistant à :
(S2) démarrer le processeur par le module de temps (703), et
(S3) activer le premier module de communication (705) par le processeur (704), le procédé présentant en outre, après l'étape (S3), l'étape consistant à :
(S6) désactiver le premier module de communication (705) par le processeur (704),
et dans lequel le procédé présente en outre, avant la répétition de l'étape (S1), l'étape consistant à :
(S12) désactiver le processeur (704) par le module de temps (703) .

12. Procédé selon la revendication 10 ou 11, dans lequel
la réception de données de capteur pendant un intervalle de transmission de données de capteur à l'étape (S4) comprend la réception selon un ou plusieurs des protocoles de réseau Bluetooth LE, LoRa, Symphony Link, weightless, Wi-Fi, HaLow, DECT ULE, M-Bus Wireless, Wireless HART ou Mioty, et
l'envoi des données stockées temporairement à l'étape (S9) comprend l'envoi selon une ou plusieurs des normes de communication 1G, 2G, 3G, 4G, 5G, Sigfox, Waviot, RPMA, NB-IOT, LTE-M ou CAT-M1.

13. Élément de programme qui, lorsqu'il est exécuté sur un processeur (704) d'une passerelle (405), amène la passerelle (405) à mettre en œuvre les étapes selon le procédé selon l'une des revendications 10 à 12.

14. Support lisible par ordinateur sur lequel est stocké un élément de programme selon la revendication 13.
